Europäisches Patentamt

European Patent Office

Office européen des brevets

(11) Publication number: **0 128 958**
**B1**

## (12) EUROPEAN PATENT SPECIFICATION

(45) Date of publication of patent specification: **28.11.90**

(51) Int. Cl.⁵: **B 23 H 7/10**

(21) Application number: **84900100.3**

(22) Date of filing: **07.12.83**

(86) International application number:
**PCT/JP83/00432**

(87) International publication number:
**WO 84/02297 21.06.84 Gazette 84/15**

## (54) ELECTRIC POWER SUPPLY APPARATUS FOR WIRE-CUT SPARK EROSION MACHINE.

(30) Priority: **07.12.82 JP 214846/82**
**07.12.82 JP 185630/82 u**
**17.01.83 JP 3317/83 u**

(43) Date of publication of application:
**27.12.84 Bulletin 84/52**

(45) Publication of the grant of the patent:
**28.11.90 Bulletin 90/48**

(84) Designated Contracting States:
**DE FR GB**

(56) References cited:
**JP-A-5 044 944**

(73) Proprietor: **INOUE-JAPAX RESEARCH**
**INCORPORATED**
**5289 Aza Michimasa Nagatsudacho Midoriku**
**Yokohamashi Kanagawaken 227 (JP)**

(72) Inventor: **INOUE, Kiyoshi**
**16-8, Kamiyoga 3-chome**
**Setagayaku Tokyo 158 (JP)**
Inventor: **HAYAKAWA, Jun JAPAX Kabushiki**
**Kaisha**
**100, Sakato Takatsuku**
**Kawasakishi Kanagawaken 213 (JP)**
Inventor: **SANO, Sadao JAPAX Kabushiki**
**Kaisha**
**100, Sakato Takatsuku**
**Kawasakishi Kanagawaken 213 (JP)**

(74) Representative: **Williams, John Francis et al**
**J.F. Williams & Co 34 Tavistock Street**
**London WC2E 7PB (GB)**

Courier Press, Leamington Spa, England.

## Description

The present invention relates to improvement in an apparatus for supplying a current to a wire electrode which is used in a wire-cut electric spark erosion machine and, more particularly, to an improved current supplying apparatus which can supply a remarkably larger average working current than that by a conventional apparatus without inducing the accident of breaking of wire electrode due to the occurrence of gaseous discharge between the wire electrode and the current supplying member such as a pin, roller, shoe, or the like for supplying the current directly contacting with the wire electrode.

Wire electrode spark erosion machine cuts a workpiece in the manner such that: a wire electrode is fed from a supply reel, and moved between a pair of electrode positioning guides under a predetermined tension, and sent and collected to an apparatus such as a take-up reel or the like; the workpiece is made approach from the direction which is almost perpendicular to the axis of the wire electrode moving between the guides forming a work gap; kerosine, demineralized water or the like is supplied as a working fluid in this gap; a train of machining voltage pulses is supplied between the wire electrode and the workpiece, thereby generating a train of pulse discharges in the work gap, while the workpiece and wire electrode are relatively fed.

However, in the conventional wire electrode spark erosion machine, there is a problem such that the accident of breaking of the wiring electrode occurs.

If the electric power supplied to the wire electrode is limited to a low level, an incidence of the accident can be held to an extremely low level.

However, by doing so, the machining speed decreases and also in certain cases, the object of machining are never realized.

The accidents of breakings of wires occur in various locations due to various causes.

It has been conventionally considered that more of such accidents are caused when the gaseous discharge or other abnormal discharge is generated at the discharge point in the work gap.

Therefore, conventionally, in order to reduce an incidence of accident and to safely and continuously perform the machining by use of a large current at a high speed and under high load, it has been considered that it is enough to supply a large amount of working fluid to the discharge point so as not to cause the gaseous discharge in the working gap, thus, for attainment of such an object, engineers have been mainly concerned with improvement in the technology to supply the working fluid to the discharge point in the working gap.

However, the inventors which made the present invention have discovered that although this kind of accident of wire occurs due to the abnormal discharge which is generated at the discharge point, in many cases, it is rather caused due to the spark discharges which are occurred at the contact point of the wire electrode and the current supplying apparatus for supplying a train of current pulses for machining, under a certain working condition or circumstance, and that this problem never be solved by only the improvement of the above-mentioned working fluid supplying technology, and according to this discovery, the inventors completed the present invention.

The current supplying apparatus according to the conventional technology is constituted such that no harmful gaseous discharge is generated between the wire electrode and the current supplying apparatus in the manner such that: for instance, the central axis of the apparatus is disposed perpendicularly to the passage of the wire electrode; the apparatus has a cylindrical surface arranged so that the wire electrode can come into contact therewith with a strong surface pressure; and the above-mentioned cylindrical surface portion where the current supplying apparatus which comes into contact with the wire electrode is surrounded and cooled by the cooling water or the like, which is spouted out along the wire electrode, or if not so, it is disposed in the main body of the working fluid jet nozzle filled with the working fluid, or another but similar method.

Such a cylindrical current supplying surface is widely used since it has advantages such that: the processing of it particularly, the abrasive finish is very easy; both of the friction and contact resistance are small; it also is useful to straighten the wire electrode; desired contact area and contact surface pressure can be substantially certainly obtained; and due to this, it is possible to certainly feed the current even to the thin wire electrode having a diameter of about 0.05 to 0.3 mm.

Although it was conventionally known that it is important to sufficiently cool such a current supplying apparatus, it was not known that even if this cooling is sufficiently performed, the spark discharges occur and these discharges will cause the accident of breaking of wire electrode at the contact portion of the current supplying apparatus and wire electrode.

In addition, it was not therefore understood that the shape of the current supplying apparatus is also important to solve such a problem.

By improvement of this portion, an incidence of accidents of breaking of wire electrode can be remarkably reduced and this makes it possible to carry on machining for a long time using a large current pulse train under high load.

Document JP-A 50-44944 discloses an apparatus for supplying a current to a wire electrode (4) of a wire electrode spark erosion machine comprising a current supplying member (121, 121a) for supplying an electric current for machining to said wire electrode (4) in contact relation therewith and means (771, 772) for spouting a cooling fluid to said current supplying member (121, 121a), wherein at least either of two

2

contact angles which are formed between said current supplying member (121, 121a) and said wire electrode (4) is not a sharp acute angle.

This disclosure corresponds to the introductory part of claim 1.

According to an embodiment of the present invention there is provided a wire electrode spark erosion machine machine having a moving wire electrode (2) to which current is supplied by a current supplying member (141, 142), and nozzle means (51) supplying a cooling fluid (51') to one end of the current supplying member, characterised in that said member (141, 142) has a contact surface, which contacts the electrode (2), and a back surface which with the contact surface forms a wedge shape with its apex (141b, 142b) facing into the flow of cooling fluid (51'), the electrode (2) being constrained to contact the contact surface up to the apex (141b, 142b) so that no gap forms between them, and so that the fluid (51') flows smoothly along said back surface.

The present invention is made to solve the said problems in the above-mentioned conventional technology, intending to substantially completely prevent, by extremely simple means, the accident of breaking of wire electrode at the current supplying portion for supplying the voltage pulses for processing workpiece to the wire electrode from a power source for a wire-cut electric discharge machining, thereby it makes it possible to continue operation for a long time, using a train of large current pulses under high load.

The essential point of the present invention is that at least at one of the end points of the contact line of the wire electrode and the member for supplying a current in direct contact with the wire electrode, namely, at one of the end points where troubles are more frequently occurred by air bubbles, in order to set the contact angle between the member and the wire electrode to a proper value, the shape of the current supplying member and the passageways of the wire electrode before and behind the member are made to correspond to each other, thereby preventing the gap with a wedge-shaped cross section from being produced therebetween and avoiding the occurrence of harmful electric discharge which may damage the wire electrode therebetween.

In the case where the current supplying apparatuses are provided respectively on both sides before and behind the workpiece in the passageway of the wire electrode, the present invention is applied at first to the current supplying apparatus which is put before the workpiece, namely disposed near to the wire electrode supplying apparatus.

Between two points, namely, between the contact start point where the wire electrode approaches the current supplying member and it first comes into contact therewith and the contact end point where the wire electrode leaves from the current supplying member of a constant length with the current supplying member, it departs therefrom, ordinarily, the lower one is more important than the upper positioned one.

When the contact angle of the current supplying member and wire electrode, particularly, the contact angle at the contact point in the portion where they are located on the lower side is set to a fairly large angle, i.e. an angle over at least 60°, the residence of air bubbles in the relevant portion is prevented and the occurrence of harmful spark discharge is prevented, so that an incidence of accident of breaking of wire is remarkably reduced. The current supplying capacity of the current supplying apparatus is also extremely increased.

Therefore, the working capability and operating ratio are remarkably improved.

The shapes of the current supplying member and wire electrode passageways before and behind the member are selected so as not to lose the advantage of the above-mentioned cylindrical current supplying surface as possible.

Fig. 1 is a side elevational view with a part cut away showing the main part of a wire electrode spark erosion machine provided with a well-known current supplying apparatus;

Fig. 2 is an enlarged side elevational view showing the current supplying apparatus;

Fig. 3 is a front view of the current supplying apparatus shown in Fig. 2;

Fig. 4 is a side elevational view with a part cut away showing a current supplying apparatus according to one embodiment of the present invention;

Fig. 5 is a front view of the current supplying apparatus shown in Fig. 4; and

Fig. 6 is a side elevational view with a part cut away showing another embodiment.

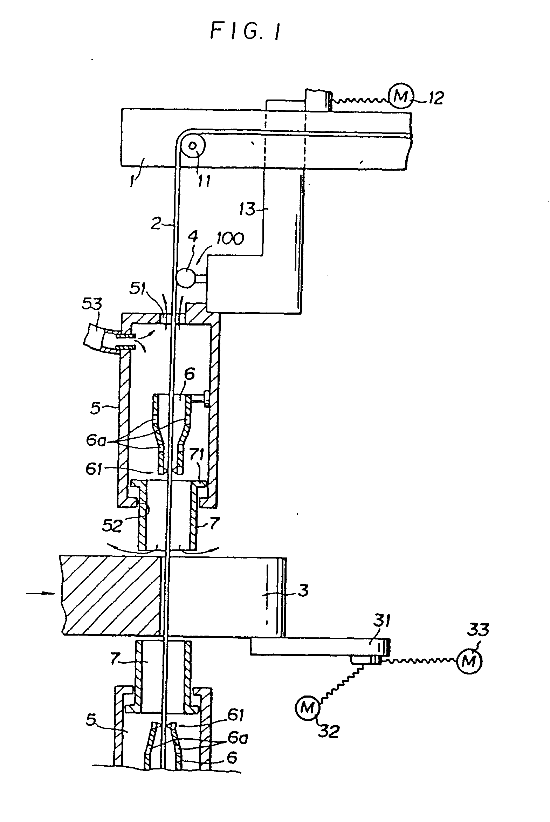

First, a current supplying apparatus 100 for use in a well-known wire electrode spark erosion machine shown in Fig. 1 will be described.

Fig. 1, a reference numeral 1 denotes an upper arm of a well-known wire electrode spark erosion machine; is a wire electrode; 3 a workpiece; 4 a cylindrical current supplying show which forms the main part of the current supplying apparatus 100; 5 a nozzle main body; 6 a guide holder; and 7 a nozzle.

In addition, although only a part is shown in the diagram, a lower arm and other well-known components corresponding to them are arranged in the lower portion of the diagram almost symmetrically as the upper arm 1 to nozzle 7.

Since these lower components substantially correspond to the upper components, only the upper components will be mainly explained below.

In this wire electrode spark erosion machine, a working fluid is spouted and supplied between the workpiece 3 and the portion between the upper and lower nozzles 7 of the wire electrode 2, and at the same time a voltage pulse is applied, thereby performing the electric discharge work.

The wire electrode 2 passes through a reel provided to a column or the like of the main body of the apparatus (not shown) and is led along the passage defined the upper arm 1 or along the surface thereof; passes through a tension roller (not shown) and a guide roller 11 and the like which are equipped with the arm 1 and extends downward; passes through a guide roller provided in the lower arm (not shown) symmetrically as the guide roller 11; further passes through a capstan or take-up roller and the like (not shown); and is moved to a take-up reel or collecting vessel equipped with the column and the like.

A L-character shaped supporting member 13 is elevationally attached to the arm 1 and is made ascend and descend through a screw apparatus which is rotated by a motor 12, and the member 13 can be held in a desired location.

The ordinary columnar current supplying shoe 4 made of sintered hard alloy is disposed in front of the lower end portion of the supporting member 13 in order to apply the voltage pulse in contact relation with the wire electrode 2. This shoe 4 is in contact with the wire electrode 2 which is moved between the upper and lower guide rollers.

Also, the hollow cylindrical nozzle main body 5 is fixed to the lower end portion of the supporting member 13, or it is attached thereto so that fine location can be adjusted in accordance with the necessity.

Opening portion 51 and 52 are almost coaxially formed in the upper and lower end surfaces of this nozzle main body 5 and the wire electrode 2 passes therethrough along the central axis of these opening portions.

Further, a guide holder 6 having an upper positioning die 61 is coaxially fixed inside the nozzle main body 5, or it is attached thereto so that fine location can be adjusted in accordance with the necessity.

The guide holder 6 is the hollow pipe of which the lower portion is thinner than the upper portion and has a working fluid flowing orifice 6a at the side thereof.

In addition, the positioning die 61 is attached to the lower end portion of the guide holder 6. The passage where the wire electrode 2 for use in working of the workpiece 3 passes through is determined by this die 61.

On the other hand, the nozzle 7 slidably engages the opening 52 at the bottom of the nozzle main body 5 and is located in a proper position in accordance with the supply pressure and flow rate of the working fluid, distance to the workpiece 3, and the like.

The nozzle 7 is the hollow pipe of proper dimensions having a flange 71 at one end, and the tubular portion is coaxially inserted into the opening 52 in the bottom surface of the nozzle main body 5 so that it can be freely slide in the axial direction.

The outer diameter of the flange 71 which is located in the nozzle main body 5 is set to be larger than the inner diameter of the opening portion 52 at the bottom portion of the nozzle main body 5 for prevention of drop of the nozzle 7 from the nozzle main body 5.

A nozzle adapted to be coupled with a pressure supply hose 53 for the working fluid is provided in the upper portion of the nozzle main body 5, and the working fluid is supplied into the nozzle main body 5 through this nozzle.

The working fluid serves to cool the positioning die 61 inside the nozzle main body 5 and is spouted from the nozzle 7 at the lower portion to the workpiece 3 along the wire electrode 2, and at the same time it is spouted upward from the upper opening 51, thereby to cool the wire electrode 2 and current supplying shoe 4.

On the other hand, the workpiece 3 is attached on a working table 31.

The working table 31 is movable along a predetermined passage on the surface which is perpendicular to the central axis of the wire electrode 2 by means of motors 32 and 33 under control by a numerical control unit.

In this wire electrode spark erosion machine, the electric discharge is generated in the work gap between the wire electrode 2 and the workpiece 3, while the energy necessary for work of the workpiece 3 is mainly supplied from the current supplying shoe 4 to the wire electrode 2. The wire electrode 2 receives the current while moving in contact relation with the surface of the current supplying shoe 4. Also, since the wire electrode 2 is the thin wire material having the diameter of about 0.05 to 0.30 mm, the contact area therebetween is small and the contact resistance is too large to be ignored.

Due to this, unless the current supplying shoe 4 is forcibly cooled, the temperature thereof will become fairly high in a relatively short time after the start of work, so that the wire electrode 2 may be easily broken, although it depends upon the average working current.

Therefore, as mentioned above the working fluid is spouted from the opening 51 of the nozzle main body 5 along the wire electrode 2 and is dashed on the current supplying shoe 4, or the shoe is further surrounded by the working fluid and is cooled, thereby preventing the breaking of wire electrode 2.

However, the present inventors have found out that it is impossible to completely prevent the accident of breaking of wire electrode 2 at the current supplying portion by means of such the conventional well-known cooling.

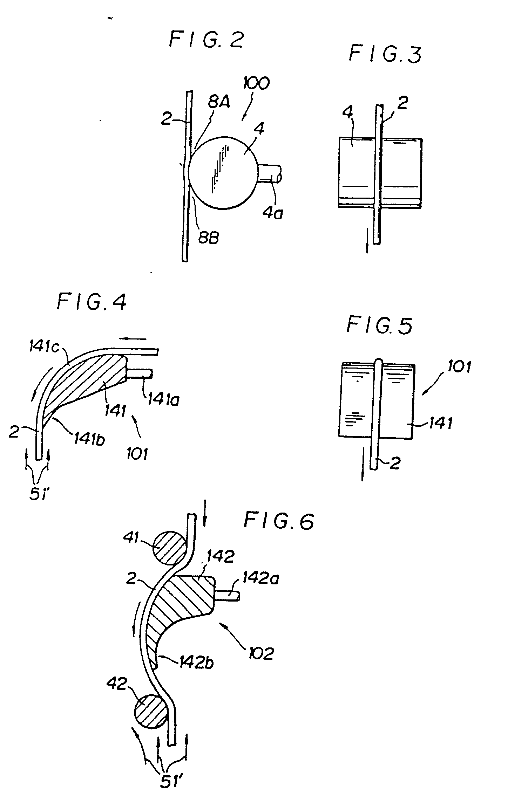

This problem will be explained with reference to Figs. 2 and 3.

In the conventional current supplying apparatus 100 which has been most widely employed, the cylindrical current supplying shoe 4 as shown in Figs. 2 and 3 is horizontally supported by a supporting arm 4a and comes into contact with the wire electrode 2 moving along the vertical passage, thereby supplying the current for work.

The details of the internal structure of this supporting arm 4a and method of attaching the current supplying shoe 4 and the like are disclosed in, for example, the Official Gazette of Japanese Utility Model Disclosure No. 014014/ 1981.

The current supplying apparatus of this type is widely used since there are advantages such that the frictional resistance for the wire electrode 2 is small and it is easily machinable.

However, as shown in Fig. 2, wedge-shaped gaps 8A and 8B are formed between the wire electrode 2 and the cylindrical surface of the current supplying shoe 4.

The wire electrode 2 is bent along a small arc of constant length, due to the contact pressure with the current supplying shoe 4, and comes into contact with the current supplying shoe 4 therebetween.

However, in other portion than the above-mentioned contact portion, the wire electrode 2 becomes a straight line which is parallel to a tangent line of the above-mentioned cylindrical surface at both end points of the contact portion, so that the contact angle between them at each of those contact end points becomes 0°.

In other words, the gap between them in this portion becomes the extremely thin and sharply pointed wedge-like gap space.

On the other hand, the cooling water in this gap is heated due to the thermal conduction from the current supplying shoe 4 which is at a high temperature and the Joule's heat generated by the current flowing inside the shoe, so that it is vapourized and becomes the water vapor, in addition, the cooling water is electrolyzed due to the above-mentioned current, so that the gas is generated.

Thus, there have been discovered the facts such that even if there vapor and gas are subjected to the strong jet stream of the cooling water, they will remain for a long time in those gaps, particularly, in the lower gap 8B of the current supplying shoe 4; that due to this, the air bubbles consisting of these gas and vapor almost always exist in this gap 8B; and that these air bubbles become a large cause of the accident of breaking of wire electrode.

Namely, this gas or water vapor surrounds the contact portion of the wire electrode 2 and current supplying shoe 4, thereby obstructing the supply of the fresh cooling water to the contact portion of them.

If so, since these gas and vapor have low thermal conductivity, a small quantity of cooling water which still remains in the contact portion is rapidly evaporated or vapourized or gasified due to the electrolysis so that this provides an opportunity of occurrence of gaseous discharge between them.

Although the gaseous discharge is not always generated immediately even in this state, however, if the wire electrode 2 is skipped or a poor contact occurs due to some reasons, in the inside of the air bubbles remaining them, there will be caused a current, i.e., spark discharge accompanied with the dielectric breakdown of the gaseous layer interposed between the current supplying shoe 4 and the wire electrode 2.

Since this spark discharge exerts a damage to the wire electrode 2 to a certain degree, the wire electrode will be immediately broken or even if it is not broken at that time, it will be easily broken in the case where the discharge occurs in that damage portion or short-circuit and the like occur in that portion when the wire electrode 2 is sent to the machining portion for the working piece 3.

As is often the cases where the wire electrode 2 is given ultrasonic vibration and the like, however, even when it is not such case, it is always vibrating since it is subjected to influences such as the impact pressure in association with the discharge generated in the work gap, vortex stream in the working fluid jet stream spouted out, variation in friction at each portion of the take-up apparatus, and the like.

This vibration reduces the friction and contact resistance between the wire electrode 2 and the current supplying shoe 4 and at the same time assists the removal of the above-mentioned air bubbles.

However, on the other hand if the contact portion is surrounded by these gases and the gas enters between the contact surfaces, it can be a cause for occurrence of spark discharge. Therefore, in this invention, such current supplying apparatuses as shown in Figs. 4 to 14 will be employed so as not to cause the spark discharge between the wire electrode and the current supplying shoe.

All of them are constituted in the manner such that the contact angle between the wire electrode and the current supplying shoe at each of both upper and lower end points of the contact portion therebetween, particularly, at the troublesome lower end point, is not 0°, preferably, it is set to an angle from 60° to 90° or more, and that any gas is notable to remain in the contact portion between them.

This object is accomplished by an arrangement such that the contour shape of the current supplying shoe is formed like a square at the end point of the contact portion with the wire electrode and that in case of observing from the end point of the problem, these elements strongly contact each other on the side of the contact portion and they rapidly depart on the noncontacting side, or, by filling the above-mentioned wedge-shaped gap space between the current supplying shoe and the wire electrode with proper substance.

The current supplying apparatuses will be sequentially described hereinbelow from Fig. 4.

A current supplying apparatus 101 shown in Fig. 4 and 5 comprises: a current supplying shoe 141 having a beak-like or plough-like cross section; and a bar 141a for supporting it and supplying a current. Also, a numeral 51' indicates a jet stream of the cooling water spouted to the current supplying apparatus 101 along the wire electrode 2. The current supplying shoe 141 has a sharp pointed edge portion 141b at the lower end portion, and the surface shape of the portion from the upper surface thereof to the edge portion 141b is an almost quarter cylindrical surface 141c.

The wire electrode 2 horizontally approaches from the right side of the drawing and changes the direction by an angle of about 90° through this quarter cylindrical surface 141c and departs vertically downward.

Consequently, the passage of the wire electrode 2 is constituted in the manner such that when the wire electrode passes along the current supplying shoe 141, it is in close contact with the quarter cylindrical surface 141c and after it departed from the point of its edge portion 141b, it is moved along the tangent line of the quarter cylindrical surface 141c.

In this embodiment, the sharp edge portion 141b is provided to the current supplying shoe 141, thereby allowing the wire electrode 2 to depart from the point of the edge portion 141b. The complementary angle of the contact angle at that point, namely, of the angle between the surface or the tangent line on the side where the wire electrode 2 is in contact with the edge portion and the surface or the tangent line on the noncontacting side extending therefrom is set to be as large as possible, i.e. to an angle over at least 60°.

In this state, a narrow gap in which the gas remains is not formed between the wire electrode 2 and the edge portion 141b. On the other hand, the current supply from the current supplying shoe 141 to the wire electrode 2 is mainly performed at the portion where the pressure based on the tension which acts on the wire electrode 2 become maximum, namely, at the portion of the shoulder in the left upper portion in the diagram. Therefore, no air bubble as mentioned before is produced and even if the air bubbles adhered on the wire electrode 2 intend to remain on the point side of the edge portion 141b of the current supplying shoe 141, they are forced up along the surface of the point and are removed therefrom due to the jet stream 51′ and since the point of the edge portion 141b is sharply pointed. Thus, the cooling of the wire electrode 2 and current supplying shoe 141 by the jet stream 51′ is not obstructed by the air bubbles, thereby completely preventing the spark discharge and accident of breaking of wire which is caused due to it. The current supplying shoe 141 can also be cooled by providing ducting through the shoe, through which a cooling fluid can be passed.

A current supplying apparatus 102 shown in Fig. 6 comprises: a current supplying shoe 142 having a cross section like a low shoe; a bar 142a for supporting the current supplying shoe 142 and supplying a current; and guide rollers 41 and 42 for the wire electrode.

A feature of this embodiment is that the wire electrode 2 is pressed onto the current supplying shoe 142 by use of the guide rollers 41 and 42.

In this current supplying apparatus 102 also, a tiptoe portion 142b of the current supplying shoe 142 is kept closely in touch with the wire electrode 2 and there is no room that the air bubbles remain therein, so that it is possible to prevent the spark discharge and accident of breaking of wire which is caused due to it.

Since the current supplying apparatus by use of the fixed shoe is generally provided in the upper portion than the workpiece, the apparatus of the present invention is also ordinarily applied to the upper current supplying apparatus than the workpiece.

However, in the case where the wire electrode is moved from the lower portion to the upper portion, it can be obviously applied to the current supplying apparatus which is provided in the lower portion of the workpiece.

Namely, although the present invention is implemented in the apparatus of the current supplying shoe type which is mainly provided on the supply side of the wire electrode, it can be also applied to other type of current supplying apparatus and a current supplying apparatus on the wire electrode collecting side.

On the other hand, in the wire electrode spark erosion machine of the laterally placed type, the passage of the wire electrode is horizontally mounted and fed, even in this case, if a current supplying member similar to the above-mentioned member is used, the present invention can be applied by suitably modifying one of the abovementioned corresponding embodiments.

By adopting the current supplying apparatus according to the present invention to a prior art wire electrode spark erosion machine, the accident of breaking of wire electrode at the current supplying portion is almost completely prevented and reliability of the spark erosion machine is raised, thereby enabling the automatic operatorless operation to be performed for a long time. At the same time, since the maximum capacity of the current is safely and remarkably increased, this makes the high speed work possible, so that both of the efficiency of investment and productivity of labor are remarkably improved.

**Claims**

1. A wire electrode spark erosion machine having a moving wire electrode (2) to which current is supplied by a current supplying member (141, 142), and nozzle means (51) supplying a cooling fluid (51′) to one end of the current supplying member, characterised in that said member (141, 142) has a contact surface, which contacts the electrode (2), and a back surface which with the contact surface forms a wedge shape with its apex (141b, 142b) facing into the flow of cooling fluid (51′), the electrode (2) being constrained to contact the contact surface up to the apex (141b, 142b) so that no gap forms between them, and so that the fluid (51′) flows smoothly along said back surface.

2. A machine according to claim 1, wherein the back surface and the contact surface meet at said apex at an angle of 60° or more.

3. A machine according to claims 1 or 2, wherein the electrode (2) is constrained to contact the contact surface by one or more rollers (41, 42) which direct the electrode against the contact surface.

4. A machine according to any preceding claim, wherein the current supplying member (141, 142) is cooled by a duct or ducts passing therethrough.

**Patentansprüche**

1. Eine Drahtelektrodenfunkenerosionsmaschine mit einer sich bewegenden Drahtelektrode (2), der Strom durch ein Stromxuführungsglied (141, 142) zugeführt wird, und mit einer Düseneinrichtung (51), die Kühlfluidum (51') einem Ende des Stromzuführungsgliedes zuführt, dadurch gekennzeichnet, daß das genannte Glied (141, 142) eine Kontaktfläche hat, die die Elektrode (2) kontaktiert, und eine Rückenfläche, die zusammen mit der Kontaktfläche eine Keilform bildet, deren Spitze (141b, 142b) in den Strom des Kühlfluidums (51') gerichtet ist, wobei die Elektrode (2) dazu gezwungen ist, die Kontaktfläche bis hinauf zur Spitze (141b, 142b) zu kontaktieren, so daß sich kein Spalt zwischen ihnen bildet und so das Fluidum (51') glatt entlang der genannten Rückenfläche strömt.

2. Drahtelektrodenfunkenerosionsmaschine nach Anspruch 1, dadurch gekennzeichnet, daß die Rückenfläche und die Kontaktfläche sich an der genannten Spitze in einem Winkel von 60° oder mehr treffen.

3. Drahtelektrodenfunkenerosionsmaschine nach Anspruch 1 oder 2, dadurch gekennzeichnet, daß die Elektrode (2) dazu gezwungen ist, die Kontaktfläche durch eine oder mehrere Rollen (41, 42) zu kontaktieren, die die Elektrode gegen die Kontaktfläche richtet.

4. Drahtelektrodenfunkenerosionsmaschine nach einem der vorhergehenden Ansprüche, dadurch gekennzeichnet, daß das Stromzuführungsglied (141, 142) durch eine oder mehrere Leitungen gekühlt ist, die durch es hindurchführen.

**Revendications**

1. Machine d'électro-érosion à électrode en forme de fil comportant une électrode-fil (2) mobile à laquelle est appliqué du courant par un organe de fourniture de courant (141, 142) et un ajutage (51) envoyant un fluide de refroidissement (51') sur l'une des extrémités de l'organe de fourniture de courant, caractérisée en ce que ledit organe (141, 142) présente une face de contact, en contact avec l'électrode (2), et une face arrière avec laquelle la face de contact forme un coin à son extrémité (141b, 142b) placé dans le flux du fluide de refroidissement (51'), l'électrode (2) étant contrainte de s'appliquer contre la face de contact jusqu'à l'extrémité (141b, 142b) en sorte qu'aucun intervalle ne se forme entre elles et que le fluide (51') s'écoule de manière régulière le long de ladite face arrière.

2. Machine suivant la revendication 1, caractérisée en ce que la face arrière et la face de contact se rejoignent à ladite extrémité sous un angle d'au moins 60°.

3. Machine suivant la revendication 1 ou 2, caractérisée en ce que l'électrode (2) est contrainte d'être en contact avec la face de contact par un ou plusieurs galets (41, 42) qui appliquent l'électrode contre la face de contact.

4. Machine suivant l'une des revendications 1 à 3, caractérisée en ce que l'organe de fourniture de courant (141, 142) est refroidi par un ou plusieurs conduits qui le traversent.

FIG. 1

FIG. 2

FIG. 3

FIG. 4

FIG. 5

FIG. 6